# EUROPEAN PATENT APPLICATION

(11) **EP 2 559 880 A2**
(43) Date of publication of application: **20.02.2013**
(21) Application number: 12180650.9
(22) Date of filing: 16.08.2012
(51) Int. Cl.: F02B 37/04, F02B 39/10, B66F 9/065

(54) **An engine system and a vehicle**

(30) Priority: 19.08.2011 GB 201114312
(71) Applicant: J.C. Bamford Excavators Ltd., Uttoxeter Staffordshire ST14 5JP (GB)
(72) Inventor: Tolley, Alan, Uttoxeter, Staffordshire ST14 5JP (GB); Loud, Colin, Uttoxeter, Staffordshire ST14 5JP (GB); Cottingham, Darryl, Uttoxeter, Staffordshire ST14 5JP (GB)
(74) Representative: Jones, John Bryn

(57) **Abstract**

An engine system including a compression ignition internal combustion engine (14), a turbo charger (34) having a turbo charger turbine (60) coupled to a turbo charger compressor (62), an electric supercharger (32) having an electric motor (64) coupled to a supercharger compressor (66), the electric supercharger (32) being operable to selective supply pressurised air to an inlet of the turbo charger compressor, and a bypass duct (76) for selectively supplying air to the inlet of the turbo charger compressor.

## Description

The present invention relates to an engine system particularly for use on a earth moving machine or a load handling machine.

Earth moving machines and load handling machines have a particular transient engine power requirement. Thus, when the front shovel of a back hoe loading machine is being used to move loose material such as a pile of stones, the machine is driven forwards into the pile of stones with the shovel lowered and as the shovel progressively fills the machine is driven further into the pile and the shovel is progressively turned upwardly and is also lifted. The time taken to fill the shovel is relatively short, of the order of a few seconds. However, during filling, the engine will typically be working at maximum power since it is both driving the transmission to move the machine forwards and also driving the hydraulic system to both turn (crowd) and lift the shovel. Accordingly, there is a high power requirement for a relatively short amount of time. The machine will then be reversed out of the pile with the full shovel. During reversing the operator will typically not reverse in a straight line, rather the machine will be turning during reversing. Because of this turning, the full shovel will be held relatively low so as to ensure the machine does not roll over during reversing and turning. Typically the machine will then be driven forward whilst the shovel is being raised to full height so that the load can be emptied for example into a lorry for onward transportation. Again, as the machine is being driven forward there is a high power requirement put upon the engine because it has to both drive the transmission and also drive the hydraulics to lift the now full shovel. Again, this high power requirement lasts for a relatively short time, of the order of a few seconds. Once the load is at full height the power demand from the hydraulics system ceases.

As will be appreciated, in order to improve efficiency, a powerful engine can be fitted to the machine. This will speed up the operation. However, more powerful engines are expensive and are less fuel efficient.

Alternatively, a engine of smaller power can be fitted which, whilst being cheaper, and more fuel efficient, nevertheless results in a lower cycle time for loading.

Accordingly, there is a requirement for a engine that is both fuel efficient and can meet the high power demands placed on it.

Thus according to the present invention there is provided an engine system including a compression ignition internal combustion engine, a turbo charger having a turbo charger turbine coupled to a turbo charger compressor, an electric supercharger having an electric motor coupled to a supercharger compressor, the electric supercharger being operable to selective supply pressurised air to an inlet of the turbo charger compressor, and a bypass duct for selectively supplying air to the inlet of the turbo charger compressor.

Advantageously, by providing an electric supercharger it can be operated for relatively short periods of time (for example for a few seconds) thereby temporarily increasing the maximum power the engine can produce. When high engine power is not required, the electric supercharger can be disabled and the engine can be fed via the bypass duct.

The bypass duct may include a valve for selectively closing bypass duct.

The valve may be an automatic valve which closes when an air pressure on the downstream side of the valve is higher than an air pressure on the upstream side of the valve.

The engine system may include an air intake system for selectively supplying air to the bypass duct and to an inlet of the supercharger compressor.

The air intake system may include a cooler for the electric motor, the cooler being fed by air passing through the air intake system.

The engine system may include a battery for supplying power to the electric motor, an engine driven recharging system for recharging the battery and a control system for reducing the power consumed by the recharging system when the electric supercharger is being operated.

The control system may include a ballast system.

The engine system may be operated by a method including the steps of:
a) running the engine at a relatively low power and a relatively low speed while supplying air to the turbocharger compressor via the bypass duct,
b) demanding an increase in engine power and an increase in engine speed,
c) powering the supercharger compressor with the electric motor and supplying pressurised air to the turbocharger compressor from the supercharger,
d) upon meeting the demand, supplying air to the turbocharger compressor via the bypass duct and ceasing to power the supercharger compressor.

Advantageously, such a method is particularly suitable for use in an earth moving machine or in a load handling machine which require a high engine power for relatively short periods of time due to operating both the transmission and the hydraulic system.

The engine system may be operated by a method including the steps of:
a) with the supercharger disabled, running the engine at a particular engine speed,
b) demanding an increase in engine power,
c) powering the supercharger compressor with the electric motor and supplying pressurised air to the turbocharger compressor from the supercharger so as to increase the engine power,
d) upon demanding a reduction in engine power, supplying air to the turbocharger compressor via the bypass duct and ceasing to power the supercharger compressor.

Advantageously, such a method is particularly suitable for use in an earth moving machine or in a load handling machine which require a high engine power for relatively short periods of time due to operating both the transmission and the hydraulic system.

The engine system may be operated such that the electric motor only powers the supercharger compressor for periods of less than 10 seconds, preferably for periods less than 7 seconds, preferably for periods less than 5 seconds.

The engine system may be incorporated into a vehicle.

The vehicle may be a load handling vehicle.

The vehicle may be a hydraulic transmission and/or a load handling apparatus having a hydraulic actuator.

According to a further aspect of the present invention there is provided a method of moving a load including the steps of providing a load handling vehicle having an engine system as defined in the first aspect of the present invention, ground engaging means operable to move the vehicle and being selectively powered by the engine system,
and a load handling apparatus being moveable relative to a chassis of the vehicle by an actuator, the actuator being powered by the engine to at least lift a load,
the method further including the steps of simultaneously:
powering the ground engaging means by the engine to move the load handling vehicle,
powering the actuator by the engine to lift the load and
using the electric supercharger to supply pressurised air to the inlet of the turbo charger compressor.

Advantageously the engines able to produce more power when there is a high power demand, i.e. when it is required to both move the vehicle and lift the load.

The load handling vehicle may move forwards when the steps carried out simultaneously are performed.

Advantageously the engine can generate more power when the vehicle picks up a load, for example when it drives forward to push a shovel into a pile of loose stones or the like, or when it drives forwards to pick up a load on a set of lifting forks.

The method may include the further step of subsequently simultaneously reversing the load handling vehicle whilst the electric supercharger is not operating.

Advantageously, under circumstances where there is not a high power demand from the engine, for example when reversing with a load, fuel can be saved by not using the electric supercharger.

The method may include the further step of subsequently simultaneously powering the ground engaging means by the engine to move the load handling vehicle forwards, powering the actuator by the engine to lift the load and
using the electric supercharger to supply pressurised air to the inlet of the turbo charger compressor.

Advantageously when there is a high power demand, for example when the vehicle is both moving forwards and lifting a load, then the supercharger can be used to increase the power delivered by the engine.

The method may include the step of subsequently releasing the load.

The method may include the further step of subsequently simultaneously reversing the load handling vehicle whilst the electric supercharger is not operating.

The method may include the further step of subsequently simultaneously powering the ground engaging means by the engine to move the load handling vehicle forwards, powering the actuator by the engine to lift a further load and using the electric supercharger to supply pressurised air to the inlet of the turbo charger compressor.

The method may include the further step of subsequently simultaneously reversing the load handling vehicle whilst the electric supercharger is not operating.

The method may include the further step of subsequently simultaneously powering the ground engaging means by the engine to move the load handling vehicle forwards, powering the actuator by the engine to lift the load and
using the electric supercharger to supply pressurised air to the inlet of the turbo charger compressor.

The method may include the further step of subsequently releasing said further load adjacent said load.

Advantageously, when moving a series of modes, for example a series of shovelfuls of stones or the like, or by moving a series of loads via forks, such as palletised loads then the cycle time can be reduced without the need for a larger more powerful engine.

The invention will now be described, by way of example only, with reference to the accompanying drawings in which:
Figure 1 is a schematic view of an engine system according to the present invention,
Figure 2 is a transient time/engine power curve for an engine according to the present invention, and for an engine not according to the present invention,
Figure 3 shows a control system used with the engine system of figure 1,
Figures 4, 5, 6, 7 and 8 are schematic views of a vehicle including an engine according to the present invention, and
Figure 9 and 10 are side views of load handling vehicles including an engine according to the present invention.

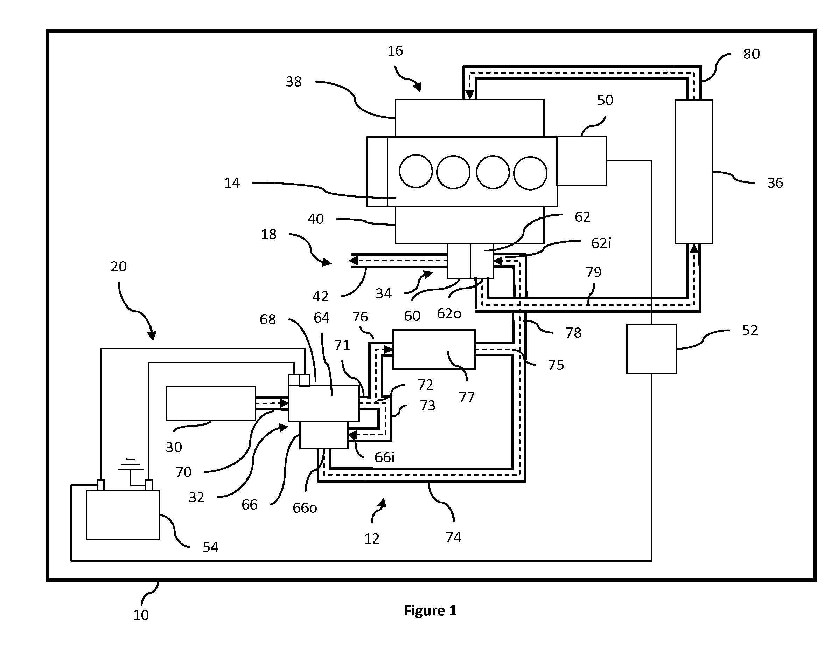

With reference to Figure 1 there is shown a vehicle 10 including an engine system 12. The engine system includes a compression ignition internal combustion engine 14, for example a diesel engine. The engine system has an air intake system 16, an exhaust system 18 and an electrical system 20.

The air intake system 16 includes an air filter 30, an electric supercharger 32, a turbo charger 34, a charge air cooler 36 and an inlet manifold 38.

The exhaust system includes an exhaust manifold 40, the turbocharger 34 and an exhaust pipe 42.

The electrical system 20 includes an alternator 50, a ballast system 52, the electric supercharger 32 and a vehicle battery 54 (typically a 12 volt or 24 volt battery).

The turbo charger has a turbocharger turbine 60 coupled to a turbocharger compressor 62.

The electric supercharger has an electric motor 64 coupled to a supercharger compressor 66.

The electric motor 64 is contained within a housing 68. An air duct 70 connects the air filter 30 to the housing 68. An air duct 71 connects the housing to a first air duct junction 72. An air duct 73 connects the first air duct junction 72 to an intake 66i of the supercharger compressor. An air duct 74 connects an outlet 66o of the supercharger compressor 66 to a second air duct junction 75. A bypass air duct 76 connects the first air duct junction 72 to the second air duct junction 75. A valve 77 is positioned in the bypass air duct 76. An air duct 78 connects the second air duct junction 75 to an inlet 62i of the turbocharger compressor. An air duct 79 connects an outlet 62o of the turbocharger compressor with an inlet to the charge air cooler 36. An air duct 80 connects an outlet of the charge air cooler with the inlet manifold 38.

The electric motor 64 can be selectively driven by the vehicle battery 54 as will be further described below. The vehicle battery 54 is selectively recharged by the alternator 50 operating via the ballast system 52.

Operation of the engine system is as follows.

When a relatively low power output is required from the engine 14 then air passes from the air filter 30 via the air duct 70 through the housing 68 through air duct 71 to the first air duct junction 72 where it passes via bypass air duct 76 through valve 77 to the second air duct junction 75 through air duct 78 through the turbo charger compressor 62 through air duct 79 through the charge air cooler 36 through the air duct 80 into inlet manifold 36 and into the engine. Once combustion has occurred the air passes into the exhaust manifold 40 and into the turbo charger turbine 60 and out through exhaust pipe 42. Under these circumstances:-
a) the valve 77 is open,
b) the electric motor 64 is not being powered by the battery, and hence the electric supercharger compressor 66 is not operating,
c) the alternator 50 will be recharging the battery 54,
d) no air will be passing through air duct 74.

Thus air fed into the inlet manifold 38 will only have one stage of compression, i.e. it will only have been compressed by the turbocharger compressor 62.

When a higher power output is required from the engine 14, then the electric motor 64 is powered (by the battery 54) and hence the supercharger compressor 66 operates. The valve 77 is also closed. Under these circumstances the air will no longer pass through the bypass air duct 76, rather it will travel from the first air duct junction 72 through the air duct 73 through the supercharger compressor 66 through air duct 74 to the second air duct junction 75 where it will then continue onwards to the inlet manifold via the turbocharger compressor and charger air cooler. Thus air entering the inlet manifold will have two stages of compression, namely a first stage of compression at the supercharger compressor 66 and a second stage of compression at the turbocharger compressor 62.

As will be appreciated, when the alternator 50 is recharging the battery 54, then this is a power drain on the engine. Accordingly, in some embodiments, when the supercharger electric motor is powered by the battery, the ballast system 52 disables recharging of the battery from the alternator 50 thereby reducing the power drain the alternator has on the engine.

If the supercharger compressor was to be continually driven via the electric motor whilst the alternator was disconnected then clearly the battery would drain and be unable to drive the electric motor. However, if the peak power demand from the engine is only for a relatively short period of time, for example only for a few seconds, then the battery may be sized to be capable of driving the electric motor for this time period. Once the peak engine power requirement has ceased, then the alternator can recharge the battery in readiness for the next peak engine power requirement.

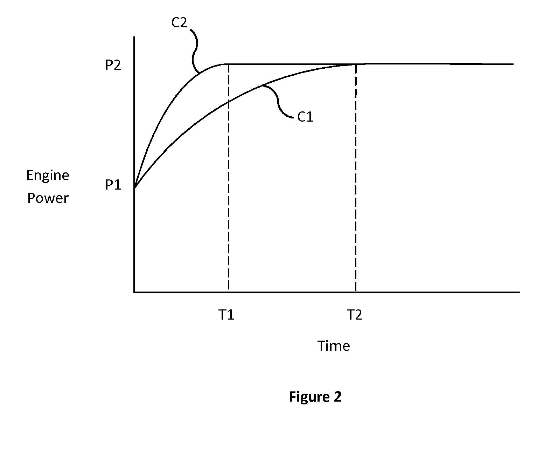

Figure 2 shows the transient response of an engine according to the present invention and an equivalent engine without a supercharger. Each engine is assumed to be running at a relatively low speed and relatively low power and at time t0 a maximum power is demanded (e.g. an operator pushes the accelerator pedal to the floor). Curve C1 shows operation of an engine without an electric supercharger. Thus it takes time t2 to increase the power from P1 to P2. Curve C2 shows how the power increases when the electric supercharger of the present invention is used. As can be seen it takes time t1 to increase the power from P1 to P2.

One of the problems with transient increases in power on diesel engines is that they tend to generate smoke in the exhaust. Curve C1 is the maximum increase in power with respect to time that can be achieved whilst maintaining acceptable smoke levels. The advantage of using the electric supercharger in C2 is that the power can be increased faster whilst still maintaining acceptable smoke levels.

Consider the situation where a machine is being used to load a pile of stones from the ground into a lorry. Several shovel loads are required to fill the lorry and, by using the present invention time can be saved when both driving forward into the pile of stones to fill the shovel, and also when driving forward towards the lorry whilst lifting the shovel so as to be able to empty the stones into the lorry. Overall a significant improvement is cycle time can be achieved.

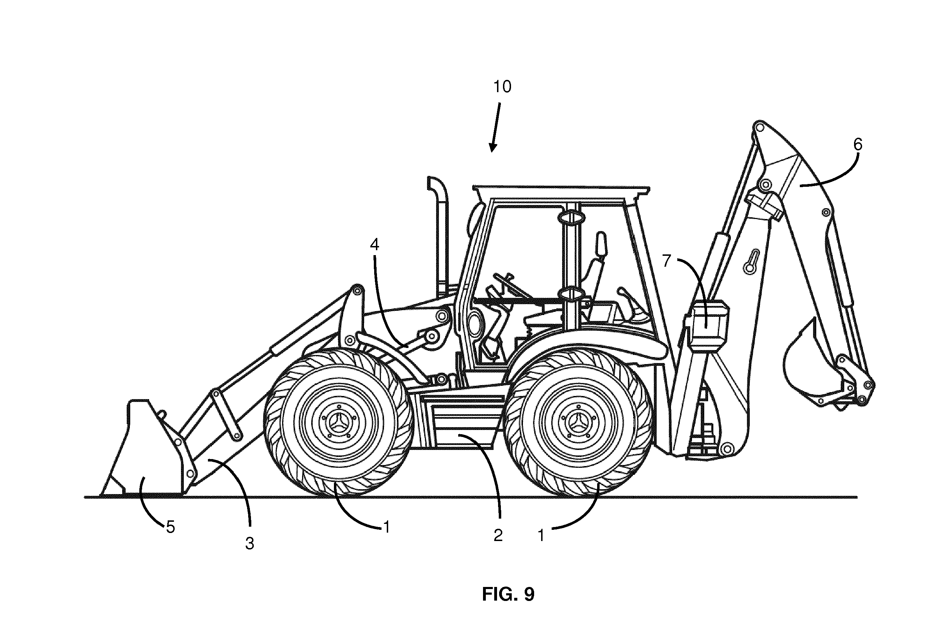

Figure 9 shows vehicle 10 which, in this example is a load handling vehicle in the form of a back hoe loader. The vehicle includes ground engaging means in the form of wheels 1, in this case two front wheels and two rear wheels. The vehicle includes a chassis 2 upon which is mounted a load handling apparatus in the form of a front loader arm 3. The front loader arm 3 is moveable relative to the chassis 2 by operation of an actuator 4, in this case a hydraulic ram. Mounted at the front of the load handling apparatus is a load handling implement in the form of a shovel 5. At the rear of the machine there is a load handling implement in the form of a back hoe 6. Stabilisers 7 are shown in a raised position in figure 9 when the shovel 5 is being used to move loads by, for example moving the vehicle forwards and backwards. Stabilisers 7 can be lowered to engage the ground to improve the stability of the machine when it is stationary and the back hoe 6 is in use. Shovel 5 can be replaced with an alternative load handling implement, for example a set of loading forks.

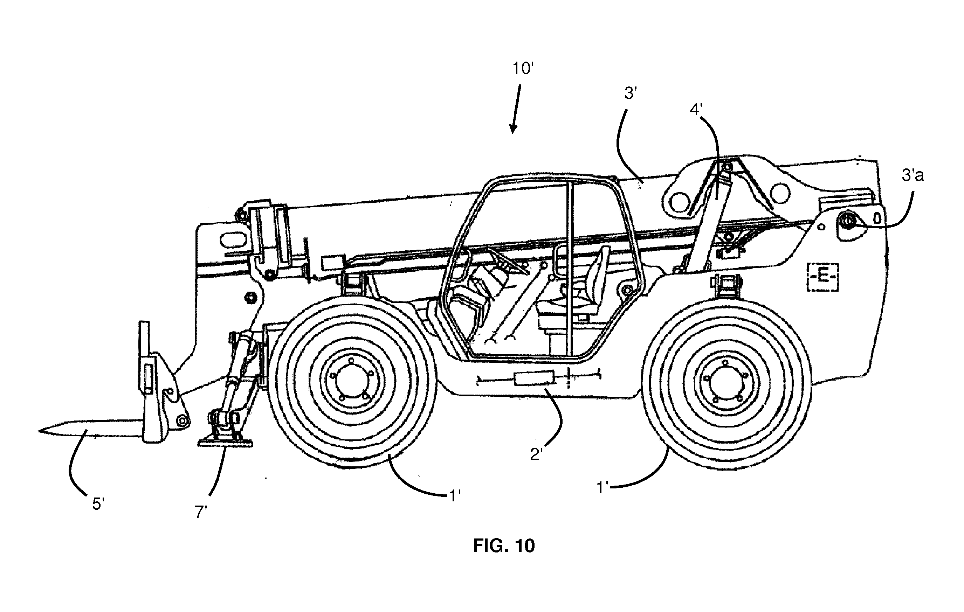

Figure 10 shows an alternative machine 10', which in this case is a telehandler. The telehandler includes wheels 1', in this case two front wheels and two rear wheels. The vehicle includes a chassis 2' upon which is mounted a load handling apparatus in the form of a loader arm 3'. The loader arm 3' is pivotally mounted relative to the chassis 2' at pivot 3A' which is proximate the rear of the machine. When in the lowered position the loader arm 3' lies substantially horizontally with a front end thereof proximate the front of the telehandler. The loader arm 3' is moved relative to the chassis 2' by operation of an actuator 4', in this case a hydraulic ram. At the front of the load handling apparatus 3' is a load handling implement in the form of a set of forks 5'. The loader arm 3' is a telescopic arm. Stabilisers 7' can be lowered so as to engage the ground when the telehandler is moving loads whilst the chassis is stationary. When the telehandler is required to move the loads by driving, for example forwards or backwards, then the stabilisers 7' will be in a raised position. Loading forks 5' can be replaced with an alternative load handling implement, for example a loading shovel.

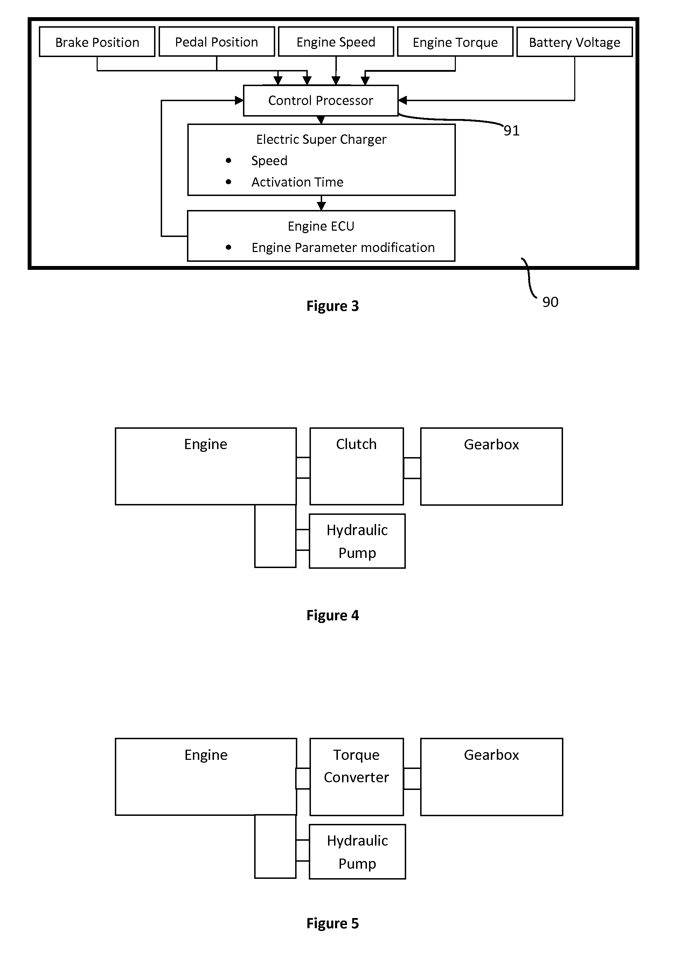

A control system (shown in figure 3) may monitor the position of the accelerator pedal (which indicates the power or speed demand requirement), the engine speed, the engine torque and the battery voltage. A control processor 91 can then determine whether or not the supercharger should be activated. Upon activation the control processor can determine the speed of the electric motor which drives the supercharger compressor and can also determine the activation time.

In one embodiment the valve 77 is an automatic valve which closes when an air pressure on the downstream side of the valve (i.e. on the side of the valve closest to the second air duct junction 75) is higher than an air pressure on the upstream side of the valve, i.e. on a side of the valve closest to the first air duct junction 72. This pressure differential will only occur when the electric supercharger is activated. In an alternative embodiment the control system 90 may operate to close the valve 77.

As mentioned above, the electric motor 64 is contained within housing 66 through which air passes. As such, the intake air acts to cool the electric motor, since the intake air is passing over the motor, thereby cooling it. The intake system therefore includes a cooler.

The ballast system operates to reduce the demand on the alternator when a relatively high demand is being placed on the battery 54. The ballast unit increases the resistance between the alternator and battery which lowers the voltage when the electric motor operates. This means that the power demand for the motor comes primarily from the battery and not the alternator.

As will be appreciated, the system used to recharge the battery need not necessarily be an alternator, any type of engine driven recharging system would be appropriate. Furthermore, it is not necessary to use a ballast system, any type of control system which reduces the power consumed by the recharging system when the electric supercharger is being operated would be suitable. For example, dedicated electrical switches could be used to isolate a recharging system. Alternatively, when the recharging system is mechanically driven, a clutch or the like could be used to mechanically uncouple the charging system from the engine drive.

The present invention is particularly useful in earth moving machines and in load handling machines. In such machines the engine is required to at least drive a hydraulic pump which supplies pressurised fluid to ancillary equipment. Thus, as shown in figure 4 the engine drives both a clutch and a hydraulic pump with the clutch driving a gear box and the gear box driving the wheels of the vehicle. The hydraulic pump can be used to supply pressurised oil to ancillary equipment such as hydraulic rams for loader buckets, back hoes, lifting forks and the like.

Alternatively figure 5 shows the engine driving a torque converter which in turn drives a gear box, the engine also driving a hydraulic pump which supplies pressurised fluid to ancillary equipment.

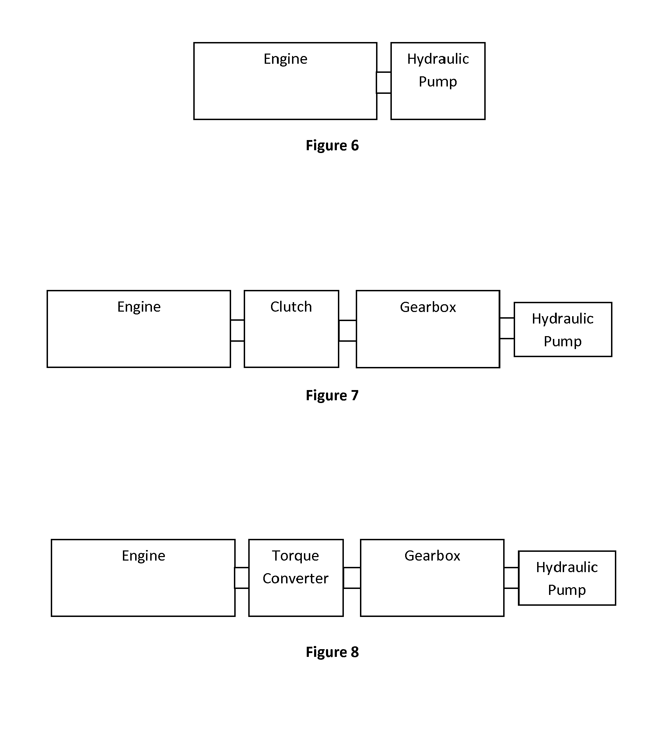

Figure 6 shows the engine driving a hydraulic pump with the hydraulic pump supplying pressurised oil to hydraulic motors for moving the machine and also for supplying pressurised hydraulic fluid to ancillary equipment such as hydraulic rams which operate loader shovels, back hoes and the like.

Figure 7 shows an engine driving a gear box via a clutch with the hydraulic pump being driven by the gear box. The hydraulic pump supplies pressurised fluid to ancillary equipment.

Figure 8 is similar to figure 7 except the gear box is driven via a torque converter rather than a clutch.

As described above, the invention can be used with load handling machines such as back hand loaders and telehandlers. However, the invention is equally applicable to other types of load handling machines. However, the invention is particularly applicable to load handling machines which can move a load by virtue of moving the machine over the ground e.g. by ground engaging wheels, tracks or the like.

As described above, the invention can be used with load handling implements such as a loading shovel or a set of forks. However, the invention can equally be used with other types of load handling implements.

As described above, figure 1 shows a schematic view of vehicle 10 which, from figure 9, can be seen to be a back hand loader. However, the vehicle 10 of figure 1 can be any type of load handling machine, such as the machine shown in figure 10 or any other type of load handling machine.

Equally figures 3, 4, 5, 6, 7 and 8 can be used with loading machine 10 shown in figure 9, loading machine 10' shown in figure 10 or any other type of loading machine.

## Claims

1. An engine system including a compression ignition internal combustion engine, a turbo charger having a turbo charger turbine coupled to a turbo charger compressor, an electric supercharger having an electric motor coupled to a supercharger compressor, the electric supercharger being operable to selectively supply pressurised air to an inlet of the turbo charger compressor, and a bypass duct for selectively supplying air to the inlet of the turbo charger compressor.

2. An engine system as defined in claim 1 wherein the bypass duct includes a valve for selectively closing bypass duct.

3. An engine system as defined in claim 2 wherein the valve is an automatic valve which closes when an air pressure on the downstream side of the valve is higher than an air pressure on the upstream side of the valve.

4. An engine system as defined in any preceding claim including an air intake system for selectively supplying air to the bypass duct and to an inlet of the supercharger compressor.

5. An engine system as defined in claim 4 wherein the air intake system includes a cooler for the electric motor, the cooler being fed by air passing through the air intake system.

6. An engine system as defined in any preceding claim further including a battery for supplying power to the electric motor, an engine driven recharging system for recharging the battery and a control system for reducing the power consumed by the recharging system when the electric supercharger is being operated.

7. An engine system as defined in claim 6 wherein the control system includes a ballast system.

8. A method of operating an engine system as defined in any preceding claim including the steps of:
a) running the engine at a relatively low power and a relatively low speed while supplying air to the turbocharger compressor via the bypass duct,
b) demanding an increase in engine power and an increase in engine speed,
c) powering the supercharger compressor with the electric motor and supplying pressurised air to the turbocharger compressor from the supercharger,
d) upon meeting the demand, supplying air to the turbocharger compressor via the bypass duct and ceasing to power the supercharger compressor.

9. A method of operating an engine system as defined in any one of claims 1 to 7 including the steps of:
a) with the supercharger disabled, running the engine at a particular engine speed,
b) demanding an increase in engine power,
c) powering the supercharger compressor with the electric motor and supplying pressurised air to the turbocharger compressor from the supercharger so as to increase the engine power,
d) upon demanding a reduction in engine power, supplying air to the turbocharger compressor via the bypass duct and ceasing to power the supercharger compressor.

10. A method of operating an engine system as defined in claim 8 or 9 wherein the electric motor only powers the supercharger compressor for periods of less than 10 seconds, preferably for periods less than 7 seconds, preferably for periods less than 5 seconds.

11. A vehicle including an engine system as defined in any one of claims 1 to 7 or a vehicle operated by the method of any one of claims 8 to 10.

12. A vehicle as defined in claim 11 wherein the vehicle is a load handling vehicle.

13. A vehicle as defined in claim 11 wherein the vehicle has a hydraulic transmission and/or a load handling apparatus having a hydraulic actuator.

14. A method of moving a load including the steps of providing a load handling vehicle having an engine system as defined in any one of claims 1 to 7, ground engaging means operable to move the vehicle and being selectively powered by the engine system,
and a load handling apparatus being moveable relative to a chassis of the vehicle by an actuator, the actuator being powered by the engine to at least lift a load, the method further including the steps of simultaneously:
powering the ground engaging means by the engine to move the load handling vehicle,
powering the actuator by the engine to lift the load and
using the electric supercharger to supply pressurised air to the inlet of the turbo charger compressor.

15. A method as defined in claim 14 wherein the load handling vehicle moves forwards,
preferably the method includes the further step of subsequently simultaneously reversing the load handling vehicle whilst the electric supercharger is not operating,
preferably the method includes the further step of subsequently simultaneously powering the ground engaging means by the engine to move the load handling vehicle forwards, powering the actuator by the engine to lift the load and
using the electric supercharger to supply pressurised air to the inlet of the turbo charger compressor,
preferably the method includes the further step of subsequently releasing the load,
preferably the method includes the further step of subsequently simultaneously reversing the load handling vehicle whilst the electric supercharger is not operating,
preferably the method includes the further step of subsequently simultaneously powering the ground engaging means by the engine to move the load handling vehicle forwards, powering the actuator by the engine to lift a further load and using the electric supercharger to supply pressurised air to the inlet of the turbo charger compressor,
preferably the method includes the further step of subsequently simultaneously reversing the load handling vehicle whilst the electric supercharger is not operating,
preferably the method includes the further step of subsequently simultaneously powering the ground engaging means by the engine to move the load handling vehicle forwards, powering the actuator by the engine to lift the further load and using the electric supercharger to supply pressurised air to the inlet of the turbo charger compressor,
preferably the method includes the further step of subsequently releasing said further load adjacent said load.
